# EUROPEAN PATENT SPECIFICATION

(11) **EP 3 373 740 B1**
(45) Date of publication and mention of the grant of the patent: **24.02.2021**
(21) Application number: 16864978.8
(22) Date of filing: 10.11.2016
(51) Int. Cl.: A23K 10/10, A23L 33/10

(54) **COMPOSITIONS AND METHODS OF USE OF -HYDROXY- -METHYLBUTYRATE (HMB) AS AN ANIMAL FEED ADDITIVE**
ZUSAMMENSETZUNGEN UND VERFAHREN ZUR VERWENDUNG VON BETA-HYDROXY-BETA-METHYLBUTYRAT (HMB) ALS FUTTERZUSATZ
COMPOSITIONS ET PROCÉDÉS D'UTILISATION DE -HYDROXY- -MÉTHYLBUTYRATE (HMB) COMME ADDITIF D'ALIMENT POUR ANIMAUX

(30) Priority: 10.11.2015 US 201562253428 P
(43) Date of publication of application: 19.09.2018
(73) Proprietor: Metabolic Technologies, Inc., Ames, IA 50010 (US)
(72) Inventor: FULLER, John, Zearing, Iowa 50278 (US); RATHMACHER, John, Story City, Iowa 50248 (US); BAIER, Shawn, Polk City, Iowa 50226 (US)
(74) Representative: Evans, Jacqueline Gail Victoria
(86) International application number: PCT/US2016/061278
(87) International publication number: WO 2017/083487

(56) References cited:
- WO-A1-2004/037010
- US-A- 5 028 440
- US-A- 5 087 472
- US-A- 5 087 472
- US-A- 6 103 764
- US-A1- 2014 249 223
- US-A1- 2015 025 145

## Description

### Background of the Invention

### 1. Field

The present invention relates to the use of a composition comprising β-hydroxy-β-methylbutyrate for reducing microbial contamination in animal feed.

### 2. Background

*Salmonella* and other microbial contaminants are a significant hazard in animal feed, and can cause sickness and death both in the animal carriers and through transmission from the contaminated animals or feed to humans. Common animal reservoirs of *Salmonella* include chickens, turkeys, pigs and cows, although dozens of other domestic and wild animals harbor these organisms. Animal products, such as meat and eggs, provide a major vehicle of transmission to humans due at least in part to the ability of *Salmonella* to survive in animal products such as meat that are not thoroughly cooked. In addition, *Salmonella* causes substantial losses of livestock.

Recently several high profile pet food recalls have been attributed to *Salmonella* contamination. In addition to the negative impacts on animal health, pet foods and animal feed contaminated with *Salmonella* have been linked to infection in humans. Contaminated animal feed, including pet food, poses a significant risk to humans as humans come in direct contact with these feeds. To help reduce the risks to humans, the Food Safety Modernization Act has set forth a zero-tolerance policy for *Salmonella* in pet foods. Typically, pet foods are extruded/processed at high temperatures sufficient to destroy pathogenic bacteria. However, the potential for post-processing contamination still exists as thermal processing via conditioning and extrusion or pelleting only offers point-in-time mitigation of microbial contamination. The potential for post-processing contamination can occur during kibble coating, cooling, packaging and storage.

Another method for reducing *Salmonella* in animal feed is through the addition of chemical additives, which offers the potential for more long-term mitigation potential against *Salmonella* and other pathogens. Short-chain fatty acids have been widely used as feed additives to control *Salmonella* in poultry, resulting in a decrease of *Salmonella* contamination in meat and eggs. In the animal feed industry, chemical additives are often derived from blends of organic acids or commercial formaldehyde. Recently, a reduction of *Salmonella* contamination in protein meal feed ingredients with the inclusion of a medium chain fatty acid blend, organic acid blend, or an essential oil blend. Additionally, coating of pet food kibbles with the dry acidulant sodium bisulfate was found to effectively reduce the growth of *Salmonella* artificially inoculated to the treated kibbles.

In the pet food industry, *Salmonella* contamination can happen when the ingredients for producing pet food are already contaminated upon arrival at the food manufacturing facility or after the food has been subjected to the extrusion process and is then re-contaminated by microbes present in the air, machines or the environment within the facility. One method of addressing the issue of *Salmonella* contamination is to utilize a secondary barrier to microbial contamination that is formulated directly into the food product. Commonly used barriers include acidic compounds that lower the pH to inhibit bacterial growth, including phosphoric acid, hydrochloric acid or other acids. These acidic compositions can impart a sour flavor to the feed, impacting palatability. Other methods of addressing the issue include using organic acids such as formic acid, propionic acid and sodium formate as chemical additives. Butyric, acetic and lactic acids have also all been used as feed additives to reduce microbial contamination.

Thus, the need exists for additives that reduce and/or eliminate *Salmonella* contamination in animal feed.

It has been unexpectedly and surprisingly discovered that 3-Hydroxy-3-methylbutyrate (HMB) in both its free acid (HMBFA or HMB-acid) and powdered calcium salt (CaHMB) forms has antimicrobial properties when used in animal foods and feeds.

Alpha-ketoisocaproate (KIC) is the first major and active metabolite of leucine. A minor product of KIC metabolism is HMB, also known as β-hydroxy-β-methylbutyrate. HMB has been found to be useful within the context of a variety of applications. Specifically, in U.S. Patent No. 5,360,613 (Nissen), HMB is described as useful for reducing blood levels of total cholesterol and low-density lipoprotein cholesterol. In U.S. Patent No. 5,348,979 (Nissen et al.), HMB is described as useful for promoting nitrogen retention in humans. U.S. Patent No. 5,028,440 (Nissen) discusses the usefulness of HMB to increase lean tissue development in animals. Also, in U.S. Patent No. 4,992,470 (Nissen), HMB is described as effective in enhancing the immune response of mammals. U.S. Patent No. 6,031,000 (Nissen et al.) describes use of HMB and at least one amino acid to treat disease-associated wasting. HMB, combined with glutamine and arginine, has been found to increase wound collagen accumulation and improve skin wound repair.

The use of HMB to suppress proteolysis originates from the observations that leucine has protein-sparing characteristics. The essential amino acid leucine can either be used for protein synthesis or transaminated to the α-ketoacid (a-ketoisocaproate, KIC). In one pathway, KIC can be oxidized to HMB and this account for approximately 5% of leucine oxidation. HMB is superior to leucine in enhancing muscle mass and strength. The optimal effects of HMB can be achieved at 3.0 grams per day when given as calcium salt of HMB, or 0.038g/kg of body weight per day, while those of leucine require over 30.0 grams per day.

Once produced or ingested, HMB appears to have two fates. The first fate is simple excretion in urine. After HMB is fed, urine concentrations increase, resulting in an approximate 20-50% loss of HMB to urine. Another fate relates to the activation of HMB to HMB-CoA. Once converted to HMB-CoA, further metabolism may occur, either dehydration of HMB-CoA to MC-CoA, or a direct conversion of HMB-CoA to HMG-CoA, which provides substrates for intracellular cholesterol synthesis. Several studies have shown that HMB is incorporated into the cholesterol synthetic pathway and could be a source for new cell membranes that are used for the regeneration of damaged cell membranes. Human studies have shown that muscle damage following intense exercise, measured by elevated plasma CPK (creatine phosphokinase), is reduced with HMB supplementation within the first 48 hrs. The protective effect of HMB lasts up to three weeks with continued daily use. Numerous studies have shown an effective dose of HMB to be 3.0 grams per day as CaHMB (calcium HMB) (∼38 mg/kg body weight-day⁻¹). This dosage increases muscle mass and strength gains associated with resistance training, while minimizing muscle damage associated with strenuous exercise (34) (4, 23, 26). HMB has been tested for safety, showing no side effects in healthy young or old adults. HMB in combination with L-arginine and L-glutamine has also been shown to be safe when supplemented to AIDS and cancer patients.

Recently, HMB free acid (HMBFA or HMB-acid), a new delivery form of HMB, has been developed. This new delivery form has been shown to be absorbed quicker and have greater tissue clearance than CaHMB. The new delivery form is described in U.S. Patent Publication Serial No. 20120053240.

It has been unexpectedly and surprisingly discovered that use of HMB as an additive to animal feed dramatically reduces or eliminates *Salmonella* contamination in the feed.

The present invention comprises the use of HMB as an additive to animal feed to reduce or eliminate microbial contamination.

### Summary of the Invention

One object of the present invention is to provide the use of HMB in preventing, eliminating and/or reducing microbial growth in animal feed or water .

An additional object of the present invention is to provide the use of HMB in preventing, elimination and/or reducing a microbial contaminant of a foodstuff or water source.

These and other objects of the present invention will become apparent to those skilled in the art upon reference to the following specification, drawings, and claims.

The present invention intends to overcome the difficulties encountered heretofore.

### Brief Description of the Drawings

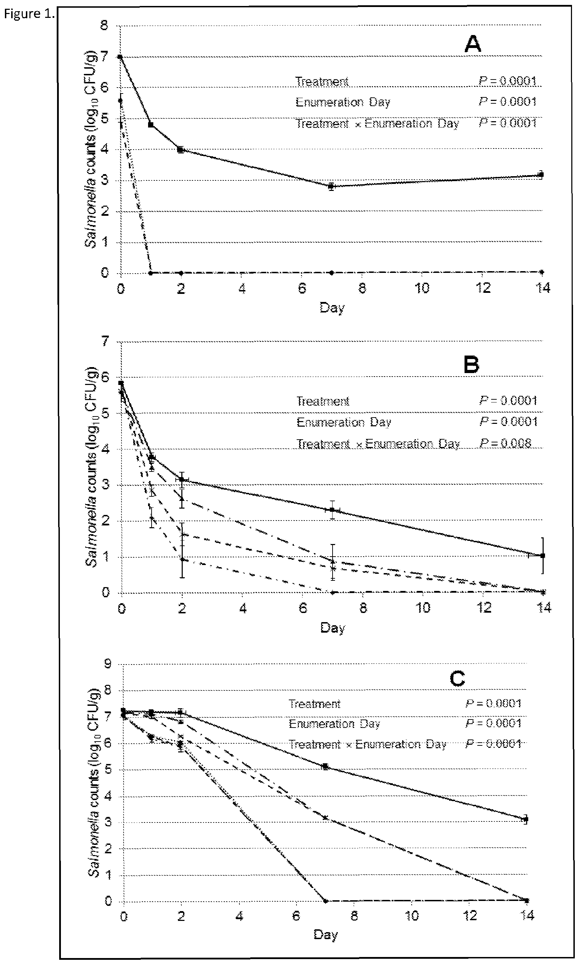

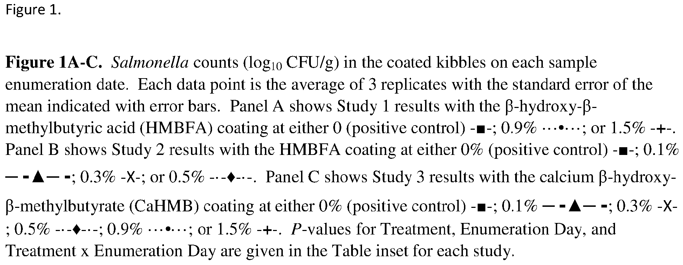

Figure 1A-C is a graph showing *Salmonella* counts in coated kibbles.

### Detailed Description of the Invention

It has been surprisingly and unexpectedly discovered that HMB reduces and/or eliminates *Salmonella* contamination in animal feed. The present invention comprises the use of HMB to result in a reduction and/or elimination of microbial contamination in animal feed. HMB can also be added to animal feed to prevent *Salmonella* contamination.

The use can be to reduce microbial contamination in humans and non-human animals such as livestock and companion animals such as dogs and cats, as well as poultry. Animal and subject are used interchangeably in this invention.

In one embodiment, HMB is applied to animal feed, such as kibble or livestock feed or poultry feed as an additive to reduce or eliminate *Salmonella* contamination.

"Animal feed" includes any foodstuffs, including a human foodstuffs including but not limited to meat products; an animal feed intended for livestock such as cattle, horses or swine; a feed intended for poultry; and pet foods or companion animal foods intended for any companion animals including dogs, cats, or horses.

"Pet foods" include kibble, treats, or chews (biscuits, rawhide, pig ears, etc.).

"Microbial contaminants" include *Salmonella* serotypes and other gram-negative bacteria such as *Escherichia, Hafnia, Kiebsiella, Pseudomonas, Shigella and Yersinia.*

"Additive" includes feed additives that are added to the feed in any way, including mixed in with the feed or applied to the feed as a coating or glaze.

### HMB

β-hydroxy-β-methylbutyric acid, or β-hydroxy-isovaleric acid, can be represented in its free acid form as (CH₃)₂(OH)CCH₂COOH. The term "HMB" refers to the compound having the foregoing chemical formula, in both its free acid and salt forms, and derivatives thereof. Derivatives include metabolites, esters and lactones. While any form of HMB can be used within the context of the present invention, preferably HMB is selected from the group comprising a free acid, a salt, an ester, and a lactone. HMB esters include methyl and ethyl esters. HMB lactones include isovalaryl lactone. HMB salts include sodium salt, potassium salt, chromium salt, calcium salt, magnesium salt, alkali metal salts, and earth metal salts.

Methods for producing HMB and its derivatives are well-known in the art. For example, HMB can be synthesized by oxidation of diacetone alcohol. One suitable procedure is described by Coffman et al., J. Am. Chem. Soc. 80: 2882-2887 (1958). As described therein, HMB is synthesized by an alkaline sodium hypochlorite oxidation of diacetone alcohol. The product is recovered in free acid form, which can be converted to a salt. For example, HMB can be prepared as its calcium salt by a procedure similar to that of Coffman et al. (1958) in which the free acid of HMB is neutralized with calcium hydroxide and recovered by crystallization from an aqueous ethanol solution. The calcium salt of HMB is commercially available from Metabolic Technologies, Ames, Iowa.

### HMB Free Acid form

In most instances, the HMB utilized in clinical studies and marketed as an ergogenic aid has been in the calcium salt form. Recent advances have allowed the HMB to be manufactured in a free acid form for use as a nutritional supplement. Recently, a new free acid form of HMB was developed, which was shown to be more rapidly absorbed than CaHMB, resulting in quicker and higher peak serum HMB levels and improved serum clearance to the tissues (18).

The HMB itself can be present in any form; for example, CaHMB is typically a powder that can be mixed with feed as an additive or applied as a powder coating, or it can be mixed with liquid and sprayed or otherwise coated on animal feed or mixed as a liquid into the animal feed, while HMB-acid is typically a liquid or gel that can also be sprayed or otherwise coated on animal feed or mixed into the feed.

In addition, HMB can be used as an additive to an animal's water to reduce microbial contamination.

### Experimental Examples

These experimental examples are non-limiting. Any form of HMB, including CaHMB and HMBFA are included in the examples. Further, the invention is not limited to the concentrations of HMB used in these examples; lower and high amounts of HMB are within the scope of the invention. These examples apply HMB as a coating, but HMB can also be mixed into the feed or it can be added to an animal's water.

For all of the studies described below, all kibble were determined to be *Salmonella* negative before being used in the study using the FDA BAM (FDA Bacteriological Analytical Manual) method. For all studies the same method was used for preparation of the *Salmonella* inoculum, kibble inoculation, and enumeration over time. All *Salmonella* inoculations to the coated kibbles were done in triplicate. For the preparation of the *Salmonella* inoculum, a stock culture of *Salmonella enterica* subsp. *enterica* Serovar Enteritidis (ATCC 13076) maintained at - 80°C was transferred to trypticase soy broth (TSB; Becton, Dickinson and Company, Franklin Lakes, NJ) and incubated at 37°C for 48 h. To prepare the culture for inoculation onto the coated kibbles, the culture was centrifuged at 5000 RPM for 10 min to pellet the cells, and all but 3 mL of the supernatant was removed. The pelleted cells were re-suspended in the remaining 3 mL of TSB and transferred to a spray applicator for inoculation onto the kibbles. A separate inoculum was prepared for each HMBFA and CaHMB inclusion level and each replicate. Inoculation of the coated kibbles was done by spraying the prepared inoculum directly onto the kibbles. A negative control was also included for each study and consisted of sterile TSB inoculated to uncoated kibbles. Following inoculation, the kibbles were shaken to thoroughly distribute the inoculum. Inoculated kibbles were allowed to equilibrate at room temperature for 2 h prior to subsampling for the day 0 enumerations. The remaining coated and inoculated kibbles were stored at room temperature for enumeration at days 1, 2, 7, and 14 post inoculation.

Enumeration of *Salmonella* was done by removing a 25g subsample of the coated and inoculated kibbles and homogenizing with buffered peptone water (BPW; Becton, Dickinson and Company, Franklin Lakes, NJ) for 15 s in a Stomacher (Seward Stomacher 400) for studies 1 and 2. For study 3, the 25g subsamples were shaken vigorously instead of using a stomacher. The homogenate was then serially diluted using BPW and spread plated onto Xylose Lysine Deoxycholate agar (XLD; Becton, Dickinson and Company, Franklin Lakes, NJ) in duplicate and incubated at 37°C for 24 h. Following incubation, plates were enumerated by counting black colonies, typical for *Salmonella.* The number of observed colonies was multiplied by the dilution factor to determine the total count in CFU/g of kibble. Representative isolates from day 0 were confirmed as *Salmonella* Serovar Enteritidis through serotyping to ensure the recovered counts represented the inoculated culture. For studies 1 and 2, collected isolates were sent for serotyping to the National Veterinary Services Laboratory (NVSL, Ames, IA). For study 3, the Eurofins Laboratory confirmed the isolates as *Salmonella* Serovar Enteritidis.

To further evaluate the *Salmonella-mitigating* properties of HMBFA and CaHMB, subsamples at the first sample time point that resulted in the recovery of zero *Salmonella* during enumeration were enriched overnight to allow damaged *Salmonella* cells to be recovered. Enriched samples were then spread plated to XLD, incubated at 37°C for 24 h, and growth of black colonies typical for *Salmonella* were noted (presence/absence result, not quantitative).

**Statistical Analysis.** The results were calculated as CFU/g of kibble and converted to log₁₀ values for statistical analysis. The GLIMMIX procedure in SAS (SAS 9.4, Cary, NC) was used with the treatment concentration as the fixed effect and enumeration day serving as a repeated measure. All data are presented as the mean of the three replications plus/minus the standard error of the mean (SEM). Statistical significance was determined for *P* < 0.05.

### Study 1

### Protocol Overview

Pet food kibble was coated with liquid HMB (free acid form) at 3 different concentrations, 0, 0.9 and 1.5%. A stock solution of *Salmonella enterica* subsp. *enterica* Serovar Enteritidis (ATCC 13076) was prepared and inoculated onto the previously coated kibbles. Inoculated samples were enumerated to determine the level of *Salmonella* remaining in the product at day 0, 1, 2, 7, and 14 post inoculation. *Salmonella* counts from the treatment and positive control were compared to determine the efficacy of HMB to reduce *Salmonella* in kibbles.

### Materials and Methods

### Kibble Coating

Kibble previously manufactured at Kansas State University was coated with HMB using a laboratory scale mixer. HMB was applied to the kibbles at inclusion levels of 0%, 0.9% and 1.5% (w:w). For application, the designated weight of HMB was diluted with sterile distilled water to a total volume of 20 mL for the 0.9 and 1.5% treatments. For the % treatment (positive control) a total of 20 mL of sterile distilled water was coated on the kibbles. Upon completion of the liquid application, kibbles were mixed for an additional five minutes to ensure n even distribution of HMBFA. Coated kibbles were then allowed to dry on trays for at least two hours, placed in plastic containers, and stored at room temperature. Inoculation of Salmonella to coated kibbles was done the day following kibble coating. Subsamples of the coated kibbles were collected and sent to MTI for analysis to verify HMB inclusion level.

### Challenge organism and stock solution preparation

*Salmonella enterica* subsp. *enterica* Serovar Enteritidis (ATCC 13076) was transferred from the stock culture maintained at -80°C to trypticase soy broth (TSB; Becton, Dickinson and Company, Franklin Lakes, NJ) and incubated at 37°C for 48 hours. To prepare the culture for inoculation onto the coated kibble, the culture was centrifuged at 5000 RPM for 10 minutes to pellet the cells, and the supernatant removed to a remaining volume of 3 mL. The pelleted cells were re-suspend in the remaining TSB and transferred to a spray-application apparatus for inoculation. A separate inoculum was prepared for each HMB inclusion level and replicate.

### Inoculation and storage of samples

For each level of HMB inclusion (0, 0.9, and 1.5%), the kibbles were inoculated with the prepared *Salmonella* inoculum (described above). A negative control was also included that was coated with sterile distilled water but not inoculated with *Salmonella.* The coated kibbles were inoculated with the prepared inoculum by directly spraying onto the kibbles. Following inoculation, kibbles were shaken to thoroughly distribute the inoculum. Inoculated kibbles were allowed to equilibrate at room temperature for 2 hours prior to subsampling for the day 0 enumerations. All remaining coated and inoculated kibbles were stored at room temperature for enumeration at days 1, 2, 7, and 14 post inoculation.

### Sample plating and enumeration

From the coated and inoculated samples, 25g subsamples were collected after the designated number of storage days. The 25g subsample was mixed with 225ml of buffered peptone water (BPW; Becton, Dickinson and Company, Franklin Lakes, NJ) and stomached for 15 seconds to homogenize. The homogenate was serially diluted using BPW and spread plated onto Xylose Lysine Desoxycholate agar (XLD; Becton, Dickinson and Company, Franklin Lakes, NJ) in duplicate. All inoculated XLD plates were incubated at 37°C for 24 hours.

After incubation, plates were enumerated by counting black colonies, typical for *Salmonella.* The number of observed colonies was multiplied by the dilution factor to determine the total count in cfu/g. Representative isolates from day 0 were confirmed as *Salmonella* through serotyping to ensure the recovered counts represent the inoculated culture. Counts for the positive and negative controls were also recorded. In addition, on the first sample date that counts of zero were recovered, the subsample was enriched overnight to allow damaged *Salmonella* cells to be recovered. Enriched samples were spread plated to XLD, incubated at 37°C for 24 hours, and growth of black colonies typical for *Salmonella* were noted (presence/absence result, not quantitative).

### Results

Based on colonies counted for each treatment on each enumeration date, cfu/g were calculated as described above. For statistical analysis (SAS 9.4), cfu/g were converted to log₁₀ cfu/g. *Salmonella* counts were averaged across replication for each treatment on each enumeration date, shown in Table 1. These results are visualized in Figure 1A. For both HMB kibble treatments, day 1 enumerations were below the limit of detection of 100 cfu/g. For enumeration on day 2, 7, and 14, both HMB treated kibbles were below the limit of detection of 10 cfu/g.

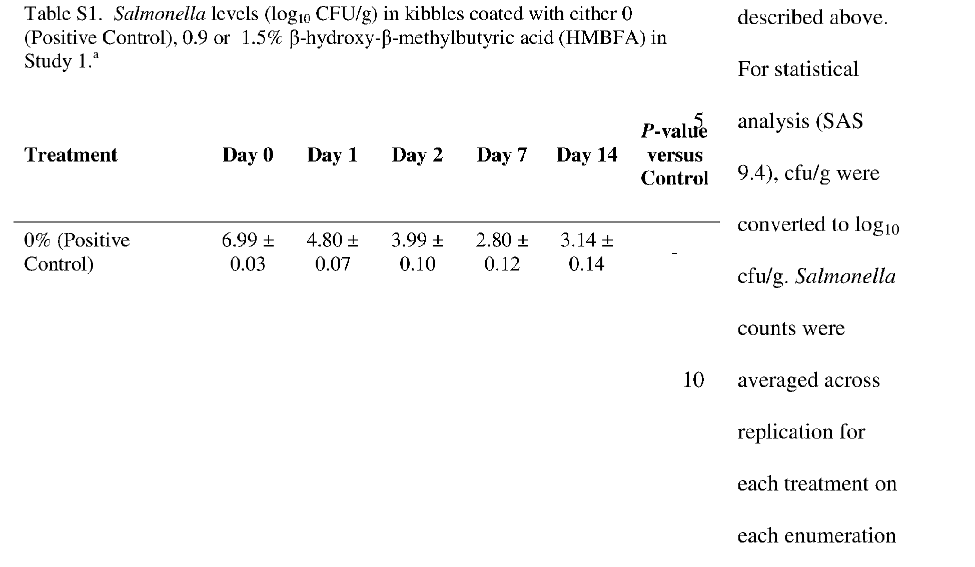

**Table 2. Main effects and interaction of factors for evaluating Salmonella reduction in HMB-coated kibbles**

| **Factor** | ***P* =** |
|---|---|
| Treatment | <0.0001 |
| Enumeration Day | <0.0001 |
| Treatment × Enumeration Day | <0.0001 |

Based on the results from enumeration on day 1, 2, 7 and 14, the subsample was retained and enriched to allow damaged cells to be recovered. Enriched samples were spread plated to XLD. Enriched colony counts are shown in Table 3.

**Table 3. Enriched sample results from days 1, 2, 7, and 14.**

| **Enumeration Day** | **Treatment** | **Results, Rep 1/2/3 (Positive/Negative)** |
|---|---|---|
| 1 | 0 % HMB (Positive Control) | +/+/+ |
| 2 | 0 % HMB (Positive Control) | +/+/+ |
| 7 | 0 % HMB (Positive Control) | +/+/+ |
| 14 | 0 % HMB (Positive Control) | +/+/+ |
| 1 | 0.9 % HMB | +/+/+ |
| 2 | 0.9 % HMB | +/+/+ |
| 7 | 0.9 % HMB | -/-/- |
| 14 | 0.9 % HMB | -/-/- |
| 1 | 1.5 % HMB | +/+/+ |
| 2 | 1.5 % HMB | +/+/+ |
| 7 | 1.5 % HMB | -/-/- |
| 14 | 1.5 % HMB | -/-/- |

For kibble treated with 0.9 and 1.5% HMB enriched samples were positive for *Salmonella* growth on day 1 and 2, but negative on day 7 and 14. Kibble treated with 0% HMB (positive control) were positive after enrichment on all days.

### Conclusion

Based on these results, HMB coating on kibbles at 0.9 and 1.5% was effective at reducing *Salmonella* artificially inoculated to the kibble. In addition, the HMB was capable of maintaining the reduced level of *Salmonella* over the 14-day test period. Increasing the inclusion level of HMB did not dramatically increase the observed reduction in Salmonella over the 14-day period.

### Study 2

### Kibble Coating

For study 2, kibbles (all life stages) were collected from a commercial pet food manufacturer prior to the fat-coating step. Again, the kibbles were coated with liquid HMB as described in study 1, but at inclusion levels of 0, 0.1, 0.3, and 0.5% (w:w), followed by drying for 2 h and storing in plastic containers at room temperature. Inoculation of coated-kibbles with *Salmonella* was again performed on the next day as described in Study 1.

### Results

For study 2, the average *Salmonella* enumeration results are shown in Table 4 and Fig1B.

**Table 4. Salmonella levels (log₁₀ CFU/g) in kibbles coated with either 0 (Positive Control), 0.1, 0.3, or 0.5% β-hydroxy-β-methylbutyric acid (HMBFA) in Study 2.^{a}**

| **Treatment Level** | **Day 0** | **Day 1** | **Day 2** | **Day 7** | **Day 14** | **Treatment *P*-value** |
|---|---|---|---|---|---|---|
| 0% (Positive Control) | 5.84 ± 0.05 | 3.78 ± 0.12 | 3.14 ± 0.22 | 2.29 ± 0.25 | 1.00 ± 0.51 | - |
| 0.1 % | 5.61 ± 0.19 | 3.50 ± 0.12 | 2.62 ± 0.26 | 0.87 ± 0.47 | 0.00 ± 0^{b} | 0.0002 |
| 0.3 % | 5.62 ± 0.06 | 2.85 ± 0.16 | 1.63 ± 0.32 | 0.67 ± 0.33 | 0.00 ± 0^{b} | 0.0001 |
| 0.5 % | 5.60 ± 0.26 | 2.09 ± 0.28 | 0.93 ± 0.52 | 0.00 ± 0^{b} | 0.00 ± 0^{b} | 0.0001 |

| | | | | | | |
|---|---|---|---|---|---|---|
| ^{a}Mean of 3 replicates ± SEM (overall SEM ± 0.12). ^{b}All samples below the limit of detection of 10 CFU/g. | | | | | | |

Day 0 *Salmonella* counts were 5.84 ± 0.05, 5.61 ± 0.19, 5.62 ± 0.06, and 5.60 ± 0.26 log₁₀ CFU/g for the 0 (positive control), 0.1, 0.3, and 0.5% HMBFA treatment levels, respectively. *Salmonella* enumerations were under the limit of detection (< 10 CFU/g) for the 0.5% HMBFA treatment on days 2, 7, and 14 and on day 14 across all treatments. By day 14 the positive control replicates averaged 1.00 ± 0.51 log₁₀ CFU/g, a decrease of about 5 logs over the study period. All enriched subsamples from the HMBFA treatment levels below the limit of detection on enumeration days 2, 7 and 14 were positive for *Salmonella* growth. Again, all isolates collected from enumerations were confirmed *Salmonella* Serovar Enteritidis via serotyping.

### Study 3

### Kibble Coating

For study 3, the commercially manufactured kibbles were again used and coated with CaHMB, the powdered form of HMB, at inclusion levels of 0, 0.1, 0.3, 0.5, 0.9, and 1.5% (w:w). Briefly, the kibbles were mixed in a laboratory mixer with the CaHMB powder until the powder had adhered to the kibbles. Following CaHMB coating, the coated kibbles were stored in plastic containers at room temperature. Inoculation of the coated kibbles with *Salmonella* was done the next day, which served as day 0.

In study 3 CaHMB was used to coat the kibbles and the average *Salmonella* enumeration results are shown in Table 5 and Fig. 1C.

**Table 5. Salmonella levels (log₁₀ CFU/g) in kibbles coated with either 0 (Positive Control), 0.1, 0.3, 0.5, 0.9, or 1.5% calcium β-hydroxy-β-methylbutyrate (CaHMB) in Study 3.^{a}**

| **Treatment Level** | **Day 0** | **Day 1** | **Day 2** | **Day 7** | **Day 14** | ***P*-value versus Control** |
|---|---|---|---|---|---|---|
| 0% (Positive Control) | 7.25 ± 0.05 | 7.20 ± 0.03 | 7.15 ± 0.17 | 5.10 ± 0.11 | 3.08 ± 0.18 | - |
| 0.1 % | 7.19 ± 0.04 | 7.11 ± 0.08 | 6.84 ± 0.17 | 3.18 ± 0.03 | 0 ± 0^{b} | 0.0001 |
| 0.3 % | 7.17 ± 0.07 | 7.01 ± 0.07 | 6.26 ± 0.03 | 3.17 ± 0.04 | 0 ± 0^{b} | 0.0001 |
| 0.5 % | 7.09 ± 0.04 | 6.15 ± 0.11 | 5.87 ± 0.20 | 0 ± 0^{b} | 0 ± 0^{b} | 0.0001 |
| 0.9 % | 7.08 ± 0.12 | 6.27 ± 0.06 | 6.03 ± 0.05 | 0 ± 0^{b} | 0 ± 0^{b} | 0.0001 |
| 1.5 % | 7.04 ± 0.13 | 6.24 ± 0.07 | 5.87 ± 0.09 | 0 ± 0^{b} | 0 ± 0^{b} | 0.0001 |

| | | | | | | |
|---|---|---|---|---|---|---|
| ^{a}Mean of 3 replicates ± SEM (overall SEM ± 0.039). ^{b}All samples below the limit of detection of 10 CFU/g. | | | | | | |

Day 0 *Salmonella* counts were 7.25 ± 0.05, 7.19 ± 0.04, 7.17 ± 0.07, 7.09 ± 0.04, 7.08 ± 0.12, and 7.04 ± 0.13 log₁₀ CFU/g for 0 (control), 0.1, 0.3, 0.5, 0.9, and 1.5% CaHMB treatment levels, respectively. Enumerations on day 7 showed the 0.5, 0.9, and 1.5% CaHMB-coated kibbles had counts below the limit of detection, and by day 14 all CaHMB-treated kibbles had enumeration counts below the limit of detection (< 10 CFU/g). By day 14 the positive control replicates averaged 3.08 ± 0.18 log₁₀ CFU/g, a decrease of about 4 logs over the study period. All enriched subsamples, days 7 and 14 for the 0.5, 0.9, and 1.5% and day 14 for the 0.1 and 0.3% CaHMB-treated kibbles showed no *Salmonella* growth. Again, all isolates collected from enumerations were confirmed *Salmonella* Serovar Enteritidis via serotyping.

In each of the three studies negative controls (non-inoculated) were also processed and analyzed. No *Salmonella* was detected in the negative controls during any of the studies conducted (data not shown).

### Discussion of Studies 1-3

These studies were conducted to test the effectiveness of HMB as an anti-microbial kibble coating using a model of post processing contamination with *Salmonella.* Recently HMB has become available in the liquid free acid form which has similar acidic characteristics as other small organic acids previously demonstrated effective in reducing *Salmonella* in the model utilized in these studies. The first study conducted with HMBFA at levels of 0.9 and 1.5% (w:w) coated onto the kibbles eliminated *Salmonella* inoculated onto the kibbes within 24 h. The second study was then carried out to determine a minimally acceptable coating rate with activity against *Salmonella.* It was determined that a coating level as low as around 0.1% (w:w) was effective in eliminating the *Salmonella* inoculum by day 14 of the study. As dry powdered coatings are preferable in some manufacturing systems, a third study was conducted to test the efficacy of HMB in the powdered form, CaHMB. The powdered form was also very effective in attenuating the *Salmonella* with the lower levels eliminating the *Salmonella* after 14 days, while the higher levels eliminated the *Salmonella* during the first week after inoculation.

When comparing the effectiveness of the HMB treatments with other post-processing treatments applied to animal foods and feeds, the HMB in free acid form far surpasses other organic acids in effectiveness. The CaHMB was also as effective as the other organic acids studied in feed, and at lower levels in the surface coating and inoculation model used in the current studies.

While these studies examined the effectiveness of CaHMB and HMBFA in use as an antimicrobial surface coating, the present invention encompasses use of HMB as an antimicrobial when mixed in with feed as well.

## Claims

1. Use of β-hydroxy-β-methylbutyrate (HMB) for preventing, eliminating and/or reducing microbial growth in animal feed or water

2. Use of β-hydroxy-β-methylbutyrate (HMB) for preventing, eliminating and/or reducing a microbial contamination of a foodstuff or water source.

3. Use according to claim 1 or claim 2, wherein the HMB is selected from the group consisting of its free acid form, its salt, its ester and its lactone.

4. Use according to claim 3, wherein said salt is selected from the group consisting of a sodium salt, a potassium salt, a magnesium salt, a chromium salt and a calcium salt.

5. Use according to claim 1, wherein the animal feed is pet food, livestock feed or poultry feed.

6. Use according to claim 2, wherein the foodstuff is pet food, livestock feed or poultry feed.

7. Use according to claim 2, wherein HMB is coated on the foodstuff.

8. Use according to claim 2, wherein HMB is mixed into the foodstuff or water source.

9. Use according to claim 2, wherein the microbial contaminant is *Salmonella*

## Patentansprüche

1. Verwendung von β-Hydroxy-β-methylbutyrat (HMB) zum Verhindern, Beseitigen und/oder Reduzieren des mikrobiellen Wachstums in Tierfutter oder Wasser.

2. Verwendung von β-Hydroxy-β-methylbutyrat (HMB) zum Verhindern, Beseitigen und/oder Reduzieren einer mikrobiellen Kontamination eines Nahrungsmittels oder einer Wasserquelle.

3. Verwendung nach Anspruch 1 oder 2, wobei das HMB aus der Gruppe bestehend aus seiner freien Säureform, seinem Salz, seinem Ester und seinem Lacton ausgewählt ist.

4. Verwendung nach Anspruch 3, wobei das Salz aus der Gruppe bestehend aus einem Natriumsalz, einem Kaliumsalz, einem Magnesiumsalz, einem Chromsalz und einem Calciumsalz ausgewählt ist.

5. Verwendung nach Anspruch 1, wobei das Tierfutter Heimtierfutter, Viehfutter oder Geflügelfutter ist.

6. Verwendung nach Anspruch 2, wobei das Nahrungsmittel Heimtierfutter, Viehfutter oder Geflügelfutter ist.

7. Verwendung nach Anspruch 2, wobei das HMB auf das Nahrungsmittel aufgetragen ist.

8. Verwendung nach Anspruch 2, wobei das HMB in das Nahrungsmittel oder die Wasserquelle eingemischt wird.

9. Verwendung nach Anspruch 2, wobei die mikrobielle Verunreinigung *Salmonella* ist.

## Revendications

1. Utilisation de β-hydroxy-β-méthylbutyrate (HMB) destinée à prévenir, éliminer et/ou réduire la croissance microbienne dans un aliment pour animaux ou l'eau.

2. Utilisation de β-hydroxy-β-méthylbutyrate (HMB) destinée à prévenir, éliminer et/ou réduire une contamination microbienne d'une denrée alimentaire ou d'une source d'eau.

3. Utilisation selon la revendication 1 ou la revendication 2, dans laquelle le HMB est choisi parmi le groupe constitué par sa forme d'acide libre, son sel, son ester et sa lactone.

4. Utilisation selon la revendication 3, dans laquelle ledit sel est choisi parmi le groupe constitué par un sel de sodium, un sel de potassium, un sel de magnésium, un sel de chrome et un sel de calcium.

5. Utilisation selon la revendication 1, dans laquelle l'aliment pour animaux est un aliment pour les animaux domestiques, un aliment pour les animaux d'élevage ou un aliment pour la volaille.

6. Utilisation selon la revendication 2, dans laquelle la denrée alimentaire est un aliment pour les animaux domestiques, un aliment pour les animaux d'élevage ou un aliment pour la volaille.

7. Utilisation selon la revendication 2, dans laquelle le HMB est enduit sur la denrée alimentaire.

8. Utilisation selon la revendication 2, dans laquelle le HMB est mélangé dans la denrée alimentaire ou la source d'eau.

9. Utilisation selon la revendication 2, dans laquelle le contaminant microbien est *Salmonella.*
